# EUROPEAN PATENT SPECIFICATION

(11) **EP 1 485 230 B1**
(45) Date of publication and mention of the grant of the patent: **12.10.2005**
(21) Application number: 03711813.0
(22) Date of filing: 05.03.2003
(51) Int. Cl.: B23Q 11/08, F16P 3/02, F16C 29/08

(54) **SCRAPER ARRANGEMENT**
SCHABERANORDNUNG
DISPOSITIF RACLEUR

(30) Priority: 09.03.2002 CZ 20020874
(43) Date of publication of application: 15.12.2004
(73) Proprietor: Hestego S.R.O., 616 00 Brno (CZ)
(72) Inventor: MOKRY, Martin, 664 34 Rozdrojovice 241 (CZ)
(74) Representative: Gheorghiu, Mihnea
(86) International application number: PCT/CZ2003/000017
(87) International publication number: WO 2003/082518

(56) References cited:
- DE-A- 4 343 741
- US-A- 5 377 379
- US-A- 5 379 480
- US-A- 6 052 859

## Description

### Field of the Invention

The present invention relates to a scraper arrangement with a telescopic cover consisting of a carrier strip with an elastic seal fixed detachably to segments of the telescopic cover with springs.

### Prior Art

Telescopic covers containing scraper arrangements or scraper strips are intended for protection of guideways and other devices as, for example, ball screws or gauging devices on machine-tools, from penetration of impurities, particularly metal cuttings formed during machining, that could damage guideways. The telescopic cover consists of segments graded in their sizes, and the locked segment which can be any of the end segments of the telescopic cover is always firm while other are movable and can be telescopically pushed into one another. This enables smooth change of the telescopic cover length. Individual segments of the telescopic cover are fitted with the scraper arrangement being fixed to the bigger one of the pair of being pushed into one another segments of the telescopic cover and thus ensuring their tightness. The scraper arrangement consists obviously of a carrier strip and other elements, for example, an auxiliary strip and a seal, and is intended, together with the structure of the telescopic covers, for removal of impurities and liquids away of the guidelines to the specified direction using the specified method, in order to avoid their penetration into sensitive machine parts. The scraper arrangement is connected to the front edges of individual segments. The set of segments graded in their sizes, the number of which depends on the cover length demanded, forms together the telescopic cover. The seal of the scraper arrangement is obviously made of an elastic plastic. The latter, nevertheless, is subjected to wear, particularly due to its contact with metal cuttings and aggressive cooling liquids, and thus its service life is limited and so it requires occasional replacement.

In most of the known embodiments, the seal is fixed by means of the carrier strips made of a metal list that are fixed to the individual segments of the telescopic cover by a spot weld. When the carrier strips are fixed to the segments of the cover using the above-mentioned method, it is always necessary to dismantle the whole telescopic cover from a machine, dismantle segments, replace the seal, reassemble the cover and assemble it back to the machine. This method used for changing of the scraper seal is very demanding and time-consuming and the whole machine-tool must be shut down for several hours.

The ways of how to replace the seal of the scraper arrangement without dismantling the whole cover being aimed at reducing the whole cycle of the seal replacement to minimum period of time were solved, for example, so that the carrier strip is connected with the cover segments by means of screws or using a carrier strip-auxiliary strip arrangement. An auxiliary strip with the seal fixed is connected permanently to a steel segment of the telescopic cover with spot welds and the carrier strip is then fixed to the auxiliary strip with C-shaped clamps. The rear portion of the auxiliary strip is located under the cover segment and works simultaneously as the carrier strip holder. The patent family of the file US 6,052,859 can be given as the example of this embodiment.

Both ways described, namely, fixing of the carrier strip to the telescopic covers with bolts or by means of the auxiliary strip features with particular disadvantages. Certain problems connected with thread damages due to the deformation of telescopic covers during their use can be observed in the first method. The second method seems to be very demanding both from the financial and manufacturing point of view because manufacturing of the carrier strip-auxiliary strip arrangement used needs a pinpoint accuracy.

The object of this invention is to propose the embodiment ensuring the construction of the scraper arrangement that is undemanding from the point of view of its cost and manufacture and that can be easily used in practice and provides maximum economy in time necessary for its replacement.

### Description of the Invention

The disadvantages described above are eliminated by a scraper arrangement intended particularly for the telescopic covers of machine-tool guideways consisting of a carrier strip with an elastic seal fixed detachably to segments of the telescopic cover. The carrier strip according to the invention is advantageously manufactured from a single undivided profile rolled from a metal sheet or cold drawn or moulded from a composite, and an elastic seal fixed to the carrier strip by means of projections made in the seal and inserted into the relevant grooves in the carrier strip. The scraper arrangement is fixed detachably to the individual segments of the telescopic cover by means of clamps the rear projection of which is engaged into longitudinal orifices made close to the face of the segments while the front projections of clamps are retained towards the front portion of the carrier strip. The rear portion of the carrier strip fitted with a taper formed by bevelling or bending is inserted into the holder which is fixed from below to the segment of the telescopic cover and simultaneously holds also a shock absorber.

The main advantage according to the invention is that the single scraper arrangement that can be performed, according to the customer's demand, either as the fixed equipment or as the constituent part of the system which can be replaced without dismantling of the telescopic cover is used for each segment.

Both the structure and the shape of the carrier strip depend on the technology used for its manufacture considering, for example, whether it is moulded from the composite material, cold drawn from the metal or rolled from the metal sheet. The commercially available seal is made of the abrasion-proof elastic material, preferably of polyurethane, and the friction area being in contact with the segment of the telescopic cover is obviously relieved.

The detailed way of how the seal is connected with the carrier strip depends on the type of the carrier strip used. The carrier strip is connected with the seal so that the first and the second seal projection are inserted into the first and the second groove of the carrier strip, respectively. The scraper arrangement consisting of the carrier striper and the seal is attached to the segment faces of the telescopic cover with the clamps that are attached with their rear projection on one end into the longitudinal orifices formed in the segment faces of the telescopic cover, while the front projection of the clip located on the opposite side is reclined against the front portion of the carrier strip. The internal attachment of the carrier strips to each segment of the telescopic cover is performed so that the former are inserted into the holder which is attached to the segments of the telescopic cover, for example, by the spot weld. The holder itself has simultaneously two functions because it us used for attachment of the carrier strip and, in addition, holds the shock absorber used for absorption of the backkicks formed during the movements of the segments of the telescopic cover. In order to simplify pushing of the scraper arrangement into the holder, its carrier strip is fitted with the taper formed by bevelling or bending. The width of the scraper arrangement is specified by the width of the segments of the telescopic cover. The structure according to this invention ensures easy and quick removal and replacement of the scraper arrangement while dismantling of the telescopic cover segments is avoided.

The clamps can be advantageously made from finished spring steel, stainless steel or composite material and are designed to avoid any deformation during their mounting and dismounting and to ensure their repeated use. Depending on the thickness of the metal sheets of the telescopic cover segments, the clamps of various widths can be used for attaching of the carrier strip so that they follow the segment shape with their shape as good as possible and their damage is avoided during the use of the telescopic cover. The clamps can be of any suitable width. The advantageous embodiment according to this invention is the clamp structure used which width and number are specified by the width and number of the longitudinal orifices in the telescopic cover segments that prevents their shifting during the movement of the telescopic cover segments in any of their position during its use. In the point where the metal sheet of the telescopic covers is bended, the scraper arrangement can be interrupted or adjusted in its shape by bending that follows with its shape the profile of the telescopic cover segments. Considering the demanded strength and life service, the holder is made preferably from stainless steel sheet. Both the size and shape of the holder depend on the type of the carrier strip used, i.e. whether the profile is cold drawn, moulded from the composite material or rolled from a metal sheet.

### Brief Description of the Drawings

Further details of the invention are apparent from the following drawings.
Fig. 1 is the general view of one of the possible embodiments of the telescopic cover with three segments and replaceable scraper arrangement.
Fig. 2 is the sectional view of the scraper arrangement attached with clamps to the telescopic cover segment fitted with the carrier strip made from the profile drawn from the metal material or moulded from the composite material and mounted movably on the lower located telescopic cover segment.
Fig. 3 is the sectional view of the scraper arrangement with the carrier strip made from the profile from the rolled metal sheet.
Fig. 4a is the top view of one of the possible holder shape; and
Fig. 4b is the side view of the holder shape mentioned in Fig. 4a.
Fig. 5 shows the longitudinal orifices located close to the face of the telescopic cover segment and intended for attachment of the scraper arrangement with clamps.

### Description of the Preferred Embodiment

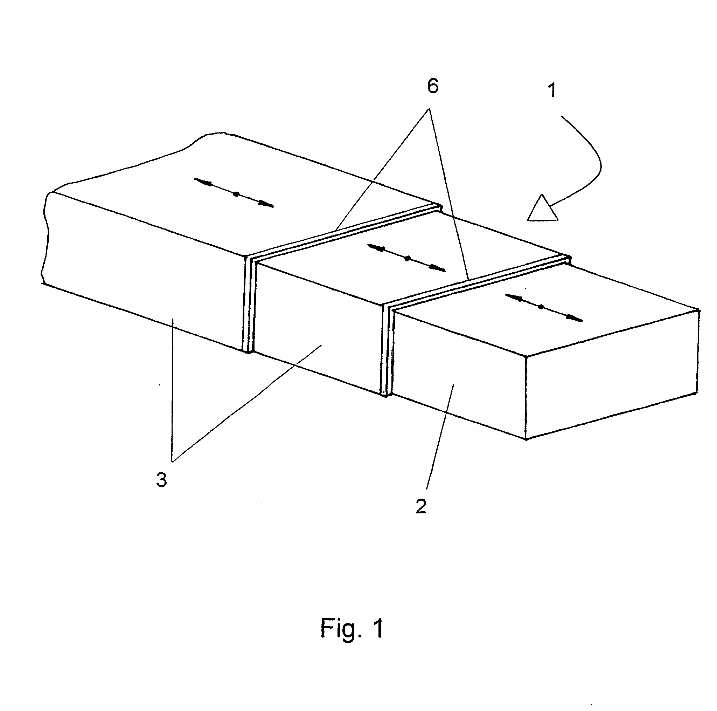

The preferred embodiment of a scraper arrangement 6 arranged in a telescopic cover 1 is described by means of the preferred embodiments of Fig. 1, Fig. 2 and Fig. 3, but not exclusively limited on them.

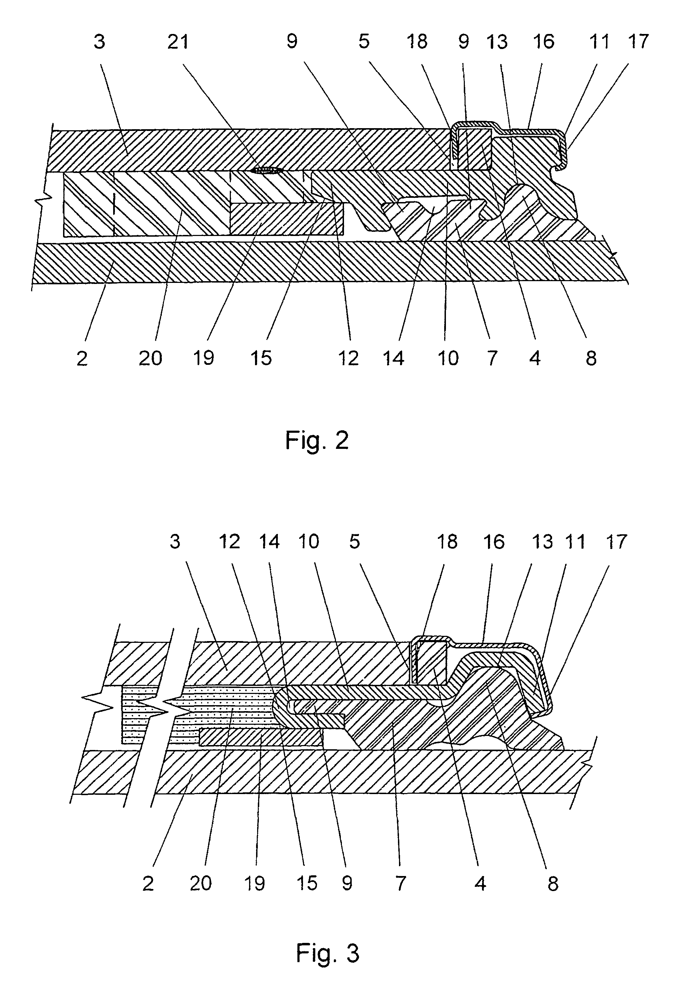

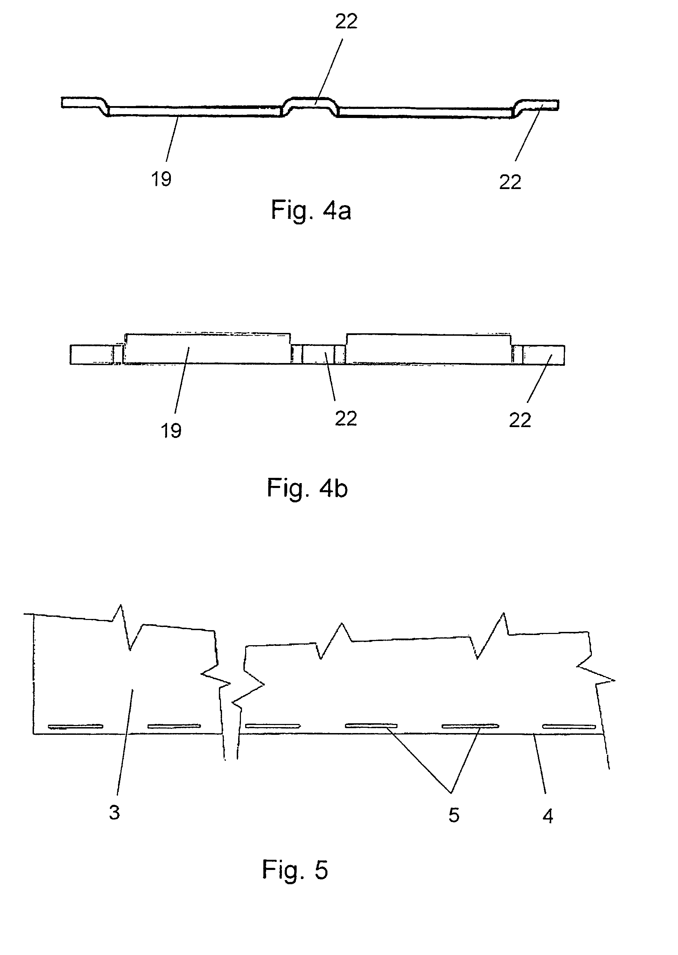

One of the preferred embodiments of the scraper arrangement 6 arranged in the telescopic cover 1 is given in Fig. 2 showing, for the clearness purpose, in detail the location of the scraper arrangement 6 between firm segment 2 and segment 3 of the telescopic cover 1. The figure mentioned shows the sectional view of the scraper arrangement 6 attached with clamps 16 to one of the segments 3 of the telescopic cover 1 fitted with a carrier strip 10 made of a profile drawn from metal material or moulded from composite material and being movably mounted on the segment 3 of the telescopic cover 1. The scraper arrangement 6, consisting of the carrier strip 10 and a seal 7, forms the integral whole. The attachment between the seal 7 and the carrier strip 10 is performed so that the first projection 8 of the seal 7 is inserted into the first grove 13 of the carrier strip 10 and the second projection 9 of the seal 7 is inserted into the second grove 14 of the carrier strip 10. The segments 3 of the telescopic cover 1 are fitted close to its face 4 with longitudinal orifices 5 the width and the spacing of which corresponds to those ones of the clamps 16. The scraper arrangement 6 is attached to a face 4 of the segments 3 of the telescopic cover 1 so that the rear projections 18 of the clamps 16 are engaged in the longitudinal orifices 5 and the front projections 17 of the clamps 16 are retained towards the front edge 11 of the carrier strip 10. Number of the clamps 16 used depends on the length of the side of the segments 3 of the telescopic cover 1. The internal attachment of the carrier strip 10 is performed by a holder 19 attached to the individual segments 3 of the telescopic cover 1 with spot welds 21. The holder 19 is made from metal sheet and its shape is given in Fig. 4a and Fig. 4b. The rear edge of the carrier strip 10 is attached to the segment 3 of the telescopic cover 1 so that it is inserted under the holder 19. In order to simplify its inserting under the segment of the telescopic cover 1, the rear edge 12 of the carrier strip 10 is fitted with a taper 15 formed by bevelling. The holder 19 holds simultaneously also a shock absorber 20 intended for absorption of the backkick formed during the movements of the segments 3 of the telescopic cover 1. Taking into account demanded rigidity, corrosion resistance and life service, the carrier strip 10 and the holder 19 are made from stainless steel. It is apparent from the embodiment mentioned that the above-mentioned segment marked with the reference sign 3 is turned to the lower located segment in case of the further segment located by one point higher.

Another embodiment of the scraper arrangement according to this invention is shown in Fig. 3 in which the carrier strip 10 of the scraper arrangement 6 is made from rolled stainless steel profile. The seal 7 is attached to the carrier strip 10 so that the first projection 8 of the seal 7 is inserted into the first groove 13 of the carrier strip 10 and the second projection 9 is inserted into the second groove 14 of the carrier strip 10. The segments 3 of the telescopic cover 1 are fitted close to its face 4 with the longitudinal orifices 5 the width and the spacing of which corresponds to those ones of the clamps 16. Number of the clamps 16 used depends on the length of the side of the segments 3 of the telescopic cover 1. Attachment of the scraper arrangement 6 to the segments 3 of the telescopic cover 1 is similar to that one given in Example 1. The scraper arrangement 6 is attached to the face 4 of the segments 3 of the telescopic cover 1 so that the rear projections 18 of the clamps 16 are engaged in the longitudinal orifices 5 and the front projections 17 of the clamps 16 are retained towards the front portion 11 of the carrier strip 10. The internal attachment of the carrier strip 10 is performed by its insertion to the holder 19 attached to the individual segments 3 of the telescopic cover 1 with spot welds 21. The longitudinal orifices 5 in which the clamps 16 are attached prevent spontaneous side shifting of the scraper arrangement 6 and thus its possible damage. In order to simplify pushing of the carrier strip 10, the taper 15 is in this case bended in the point of the first groove 13 of the carrier strip 10. The holder 19 holds, in addition to the scraper arrangement 6, also the rubber shock absorber 20 used for absorption of the backkick formed during the movements of the segments 3 of the telescopic cover 1. It applies also to this example that the segment located higher and marked with the reference sign 3 is turned into the segment located lower.

### Industrial Applicability

The invention can be applied for the industrial production of scraper arrangements intended for telescopic covers suitable particularly for protection of guideways of machine-tools and other devices, for example, ball screws, gauging devices, etc., from impurities.

## Claims

1. A scraper arrangement with a telescopic cover particularly of guideways on machine-mills consisting of a carrier strip (10) with an elastic seal (7) detachably attached to segments (3) of the telescopic cover (1) **characterized in that** the scraper arrangement (6) consisting of the carrier strip (10) and the seal (7) is detachably attached to the segments (3) of the telescopic cover (1) by means of at least one clamp (16) fitted with a front projection (17) and a rear projection (18), while at least one longitudinal orifice (5) is formed close to a front (4) of the segments (3) of the telescopic cover (1), a rear projection (18) of the clamp (16) is engaged into said orifice (5) while a front projection (17) of the clamp (16) is retained against a front portion (11) of the carrier strip (10) and a rear portion (12) of the carrier strip (10) is engaged into a holder (19) attached to the segment (3) of the telescopic cover (1) and holds simultaneously a shock absorber (20).

2. The scraper arrangement according to Claim 1 **characterized in that** the carrier strip (10) is made from a cold drawn metal profile or the profile rolled from metal sheet or the profile moulded from composite material.

3. The scraper arrangement according to Claim 1 and Claim 2 **characterized in that** the seal (7) is attached to the carrier strip (10) by means of a first projection (8) formed in the seal (7) and engaged into first groove (13) of the carrier strip (10), and second projection (9) formed in the seal (7) and engaged into second groove (14) of the carrier strip (10) while a friction area of the seal (7) being movably located on a surface of the segments (3) of the telescopic cover (1).

4. The scraper arrangement according to Claim 1 and Claim 2 **characterized in that** the carrier strip (10) is fitted with a taper (15) formed by bevelling or bending in order to simplify its insertion into the holder (19).

5. The scraper arrangement according to Claim 1 **characterized in that** a clamp (16) is made from finished spring steel or composite material.

## Patentansprüche

1. Abstreifvorrichtung mit einer teleskopartigen Ummantelung, insbesondere von Führungsbahnen auf Fräsmaschinen, wobei die Abstreifvorrichtung aus einem mit einer elastischen Dichtung (7) versehenen Tragstreifen (10) besteht, welcher an den Segmenten (3) der teleskopartigen Ummantelung (1) abnehmbar befestigt ist, **dadurch gekennzeichnet, dass** die Abstreifvorrichtung (6), welche aus dem Tragstreifen (10) und der Dichtung (7) besteht, an den Segmenten (3) der teleskopartigen Ummantelung (1) mit Hilfe von mindestens einer Klammer (16) abnehmbar angebracht ist, welche mit einem vorderen Vorsprung (17) und einem hinteren Vorsprung (18) versehen ist, während mindestens ein Langloch (5) dicht an der Frontseite (4) der Segmente (3) der teleskopartigen Ummantelung (1) ausgebildet ist, ein hinterer Vorsprung (18) der Klammer (16) in das genannte Loch (5) einrastet, während ein vorderer Vorsprung (17) der Klammer (16) gegen den vorderen Bereich (11) des Tragstreifens (10) drückt und ein hinterer Bereich (12) des Tragstreifens (10) in eine Halterung (19) einrastet, welche am Segment (3) der teleskopartigen Ummantelung (1) angebracht ist und gleichzeitig einen Stoßdämpfer (20) hält.

2. Abstreifvorrichtung gemäß Anspruch 1, **dadurch gekennzeichnet, dass** der Tragstreifen (10) aus einem kalt gezogenen Metallprofil oder aus einem Profilmaterial, welches aus einem Metallblech gewalzt wurde, oder aus einem Profilmaterial, das aus einem Verbundwerkstoff geformt wurde, gefertigt ist.

3. Abstreifvorrichtung gemäß Anspruch 1 und Anspruch 2, **dadurch gekennzeichnet, dass** die Dichtung (7) am Tragstreifen (10) befestigt wird mittels eines ersten Vorsprungs (8), welcher an der Dichtung (7) ausgebildet ist und in die erste Rille (13) des Tragstreifens (10) einrastet, und mittels eines zweiten Vorsprungs (9), welcher an der Dichtung (7) ausgebildet ist und in die zweite Rille (14) des Tragstreifens (10) einrastet, während ein Reibungsbereich der Dichtung (7) auf einer Fläche der Segmente (3) der teleskopartigen Ummantelung (1) beweglich angeordnet ist.

4. Abstreitvorrichtung gemäß Anspruch 1 und Anspruch 2, **dadurch gekennzeichnet, dass** der Tragstreifen (10) eine Verjüngung (15) aufweist, welche durch Abschrägen oder Biegen ausgebildet wurde, um sein Einsetzen in die Halterung (19) zu vereinfachen.

5. Abstreifvorrichtung gemäß Anspruch 1, **dadurch gekennzeichnet, dass** die Klammer (16) aus oberflächenbehandeltern Federstahl oder Verbundwerkstoff gefertigt ist.

## Revendications

1. Dispositif racleur, muni d'un couvercle télescopique, en particulier pour des pistes de guidage sur des broyeurs, formé d'une bande support (10) munie d'un joint d'étanchéité (7) élastique, fixé de façon amovible à des segments (3) du couvercle télescopique (1), **caractérisé en ce que** le dispositif racleur (6), composé de la bande support (10) et du joint d'étanchéité (7), est fixé de façon amovible aux segments (3) du couvercle télescopique (1), au moyen d'au moins une agrafe (16), munie d'une saillie avant (17) et d'une saillie arrière (18), tandis qu'au moins un orifice (5) longitudinal est formé à proximité d'une face avant (5) des segments (3) du couvercle télescopique (1), une saillie arrière (18) de l'agrafe (16) est mise en prise dans ledit orifice (5), tandis qu'une saillie avant (17) de l'agrafe (16) est retenue contre une partie avant (11) de la bande support (10), et une partie arrière (12) de la bande support (10) est mise en prise dans un support (19), fixé au segment (3) du couvercle télescopique (1), et maintient simultanément un absorbeur de chocs (20).

2. Dispositif racleur selon la revendication 1, **caractérisé en ce que** la bande support (10) est formée à partir d'un profilé métallique étiré à froid, ou bien le profil est obtenu par laminage depuis une tôle métallique, ou bien le profil est obtenu par moulage à partir d'un matériau composite.

3. Dispositif racleur selon la revendication 1 et la revendication 2, **caractérisé en ce que** le joint d'étanchéité (7) est fixé à la bande support (10), au moyen d'une première saillie (9) formée dans le joint d'étanchéité (7) et mise en prise dans une première gorge (13) de la bande support (10), et une deuxième saillie (9), formée dans le joint d'étanchéité (7), est mise en prise dans la deuxième gorge (14) de la bande support (10), tandis qu'une zone de friction du joint d'étanchéité (7) est située de façon déplaçable sur une surface des segments (3) du couvercle télescopique (1).

4. Dispositif racleur selon la revendication 1 et la revendication 2, **caractérisé en ce que** la bande support (10) est munie d'un effilement ou chanfrein (15) formé par chanfreinage ou pliage, de manière à simplifier son insertion dans le support (19).

5. Dispositif racleur selon la revendication 1, **caractérisé en ce qu'**une agrafe (16) est formée à partir d'acier à ressort en tant que produit fini, ou d'un matériau composite.
